# EUROPÄISCHE PATENTSCHRIFT

(11) **EP 2 108 552 B1**
(45) Veröffentlichungstag und Bekanntmachung des Hinweises auf die Patenterteilung: **29.12.2010**
(21) Anmeldenummer: 08007161.6
(22) Anmeldetag: 11.04.2008
(51) Int. Cl.: B60S 1/40, B60S 1/38

(54) **Scheibenwischer, insbesondere für Kraftfahrzeuge**
Windscreen wipers, in particular for a motor vehicle
Essuie-glace, en particulier pour véhicules automobiles

(43) Veröffentlichungstag der Anmeldung: 14.10.2009
(73) Patentinhaber: Eletromecanica Dyna S/A, Sao Paulo (BR)
(72) Erfinder: Nacamuli, Marc, Itapegica Guarulhos Sao Paulo 07042-010 (BR)
(74) Vertreter: Patentanwälte Möll, Bitterich & Dr. Keller

(56) Entgegenhaltungen:
- EP-A- 1 847 426
- DE-A1- 10 036 135
- DE-A1-102005 050 569
- FR-A- 2 841 852

## Beschreibung

Die vorliegende Erfindung betrifft einen Scheibenwischer, insbesondere für eine Scheibe eines Kraftfahrzeugs, mit einem antreibbaren Wischerarm und einem damit gelenkig verbundenen Wischblatt nach den Merkmalen im Oberbegriff des Anspruchs 1.

Ein solcher Wischerarm ist aus der EP 1 098 796 bekannt und weist zur Befestigung eines Wischblatts an seinem freien Ende einen Gelenkstift und eine parallel zum Gelenkstift angeordnete Brücke mit einem abgewinkelten Ende auf.

Ein mit einem solchen Wischerarm verbindbares Wischblatt wird in der EP 1 098 795 beschrieben. Bei dem dort beanspruchten Wischblatt handelt es sich um ein Flachwischblatt. Flachwischblätter gehören schon lange zum Stand der Technik. Sie bestehen aus einer an der Scheibe anlegbaren langgestreckten, gummielastischen Wischleiste und aus wenigstens einem darüber längsachsenparallel verlaufenden unterstützenden federelastischen Tragelement, wobei am Tragelement zentral ein Kupplungsteil angeschlossen ist.

Bei dem in der EP 1 098 795 beschriebenen Flachwischblatt ist an der Längsseite des zentralen Kupplungsteils eine zweite Gelenkhälfte, vorzugsweise in Form einer Lagerbohrung, vorgesehen, in die der Gelenkstift eines Wischerarms nach der EP 1 098 796 eingeführt wird, so dass eine drehbare Verbindung zwischen Wischerarm und Wischblatt gegeben ist. Um ein unbeabsichtigtes Lösen des Wischblatts vom Wischerarm zu verhindern, weist das zentrale Kupplungsteil eine quer zur Längserstreckungsrichtung des Wischblatts verlaufende Nut auf. Diese Quernut nimmt eine Brücke am Wischerarmende auf, wobei das abgewinkelte Ende der Brücke an der dem Wischerarm abgewandten Längsseite des Kupplungsteils anliegt. Somit ist das Wischblatt in Richtung der Gelenkachse zum Wischerarm hin zwischen zwei Anlageflächen eingeschlossen. Die erste Anlagefläche wird gebildet von der dem Wischblatt zugewandten Längsseite des Wischerarmendes, die an der dem Wischerarm zugewandten Längsseite des Kupplungsteils direkt seitlich anliegt. Die zweite Anlagefläche wird gebildet von der Innenfläche des abgewinkelten Endes der vom Wischerarmende ausgehenden Brücke, die an der dem Wischerarm abgewandten Längsseite des Kupplungsteils anliegt. Durch die das Wischblatt umgreifende Brücke des Wischerarms ist eine axiale Verrieglung gegen Herauslösen im Betriebszustand gegeben. Wegen der relativen Bewegung von Wischblatt und Wischerarm zueinander bleibt indessen auch eine relative Bewegung zwischen den Anlageflächen nicht aus, wodurch an Wischerarm und Wischblatt in diesen Bereichen Reibung und Verschleiß auftritt.

Bei der betrachteten Konfiguration ist der Wischerarm im montierten Zustand seitlich neben dem Wischblatt angeordnet. Man spricht von einem sogenannten "Side-Lock" - System. Diese Anordnung bietet strömungstechnische Vorteile, weil ein solches Scheibenwischersystem sehr niedrig baut und somit dem Fahrtwind einen geringen Widerstand entgegensetzt, was sich zum Beispiel geräuschmindernd auswirkt.

Im Gegensatz zu Flachwischblättern sind Wischblätter mit einem Tragbügelsystem mehrgliedrig aufgebaut und besitzen einen Mittelbügel, an den untergeordnete Bügel angelenkt sind, von denen zumindest einige mit Krallen an ihren Enden eine Wischleiste halten. Zur Verbindung mit dem Wischerarm weist der Mittelbügel einen nach oben offenen Einhängekasten mit zwei in Längserstreckung des Wischblatts verlaufenden Seitenwänden auf, die durch einen Gelenkbolzen miteinander verbunden sind, wobei versetzt zu diesen Gelenkbolzen in den Seitenwänden außerdem miteinander fluchtende Durchgangsbohrungen eingebracht sind.

Um von der einfachen Montage- und Demontageweise des vorbeschriebenen seitlich anschließenden "Side-Lock" - Wischerarms nach der EP 1 098 796 auch bei diesen herkömmlichen Wischblättern mit Tragbügelsystem profilieren zu können, sind aus dem Stand der Technik eine Vielzahl von Adaptern bekannt, mit deren Hilfe das Wischblatt im Anschlussbereich so angepasst werden kann, dass eine gelenkige Verbindung mit dem Wischerarm nach der EP 1 098 796 ermöglicht wird.

So beschreibt beispielsweise die EP 1 458 600 einen im Wesentlichen U-förmigen Adapter aus Kunststoff mit seitlichen Federzungen, an denen rohrförmige Lagerstutzen angeformt sind. Außerdem ist an der Innenseite der Deckwand des Adapters ein Clip vorgesehen. Zur Montage wird dieser Adapter von oben in den Einhängekasten des Mittelbügels eingeführt, bis die seitlichen Lagerstutzen in die Durchgangsbohrungen der Seitenwände des Einhängekastens und der Clip auf dem Gelenkbolzen einrasten. Der Adapter weist auf seiner Oberfläche entsprechend dem zugrundeliegenden Flachwischblatt - Kupplungsteil aus der EP 1 098 795 eine Quernut auf, in welcher die Brücke des Wischerarms im montierten Zustand gelagert ist. Der Adapter ragt mit einem Kragen jeweils über die Seitenwände des Einhängekastens heraus und bildet damit, ebenfalls entsprechend dem Flachwischblatt - Kupplungsteil aus der EP 1 098 795, beidseitig Anlageflächen mit dem Wischerarm und mit dem abgewinkelten Ende der Brücke, so dass eine Verriegelung in axialer Richtung gegeben ist.

In der EP 1 461 235 ist ein weiterer Adapter zur Verbindung eines Wischerarms nach der EP 1 098 796 mit einem Tragbügelsystem - Wischblatt beschrieben. Der Adapter besteht im Wesentlichen aus einem blockförmigen Mitteilteil mit seitlichen Führungsflächen, die durch Schlitze vom Mittelteil getrennt sind. Im montierten Zustand greifen diese Schlitze in die Seitenwände des Einhängekastens am Mittelbügel ein, wobei sich der Mittelteil des Adapters innen an den Seitenwänden des Einhängekastens abstützt. Die Deckwand des Adapters weist wiederum an ihrer Oberfläche eine Quernut auf, in der im montierten Zustand die Brücke des Wischerarmendes geführt ist. In Übereinstimmung mit dem Wischblatt - Kupplungsteil gemäß der EP 1 098 795 bilden auch hier im Bereich der Brücke die seitlich über die Seitenwände des Einhängekastens überstehenden Kragen des Adapters Anlage- und Führungsflächen, an denen im montierten Zustand eine Seitenfläche des Wischerarms und das abgewinkelte Ende der Brücke anliegen.

Bei allen bisher beschriebenen Wischblatt - Wischerarm - Anschlusssystemen liegt ein direkter Kontakt zwischen der dem Wischblatt zugewandten Längsseite des Wischerarmendes und der dem Wischerarmende zugewandten Längsseite des Wischblatt - Kupplungsteils, bzw. des im Wischblatt eingesetzten Adapters, vor. Diese Kontaktfläche ist als zweite Anlagefläche zur axialen Verriegelung bei den bekannten Lösungen zwingend erforderlich.

Kontaktfläche bedeutet hierbei wegen der im Betriebszustand zwischen Wischblatt und Wischerarm permanent stattfindenden pendelnden Ausgleichsbewegung um die Gelenkachse auch zwangsläufig Reibfläche. Solche Reibflächen sind aber unerwünscht, weil hier Abnutzungserscheinungen, wie zum Beispiel Materialverschleiß, auftreten können und die pendelnde Bewegung des Wischblatts gebremst wird.

Daher ist es immer von Vorteil, die Kontaktflächen zwischen Wischerarm und Wischblatt, die wie bereits erläutert immer auch Reibflächen sind, zu reduzieren. Aufgabe der vorliegenden Erfindung ist es demgemäss, an den bekannten Wischerarm nach der EP 1 098 796 ein Wischblatt derart gelenkig anzuschließen, dass in diesem Bereich ungünstige Reibflächen nicht länger vorhanden sind.

Diese Aufgabe wird erfindungsgemäß durch die Merkmale des Anspruchs 1 gelöst.

Weitere vorteilhafte Ausgestaltungen ergeben sich aus den Unteransprüchen.

Zur Lösung dieser Aufgabe wird als Wischblatt ein Flachwischblatt mit einem zentral angeordneten Anschlussteil verwendet, wobei das Anschlussteil einen kastenförmigen, nach oben offenen Aufbau mit vier Stirn- und Seitenwänden aufweist. Die Adaption eines solchen Flachwischblatts für den "Side-Lock" - Wischerarmtyp nach der EP 1 098 795 wird gemäß der vorliegenden Erfindung durch Anbringung eines Verbindungsteils an das beschriebene Anschlussteil des Flachwischblatts erreicht, wobei die Kupplungsteile des bekannten Wischerarmendes, das heißt Gelenkstift und Brücke, mit dem erfindungsgemäßen Verbindungsteil derart kooperieren, dass eine betriebssichere gelenkige Verbindung zwischen Wischerarm und Wischblatt erreicht ist.

Vorteil der vorliegenden Erfindung ist es, dass das Verbindungsteil konstruktiv so an das Anschlussteil des Wischblatts und an die Kupplungsteile des Wischerarms angepasst ist, dass im montierten Zustand kein direkter Kontakt mehr zwischen der dem Wischblatt zugewandten Seitenwand des Wischerarmendes und den dem Wischerarm zugewandten Seitenwänden des Wischblatts und des Verbindungsteils besteht. Im Unterschied zum Stand der Technik wird bei der vorliegenden Erfindung die Querverriegelung des Wischblatts mit dem Wischerarm dadurch erreicht, dass zunächst der Stift des Wischerarms bis zum Anschlag in eine blinde Bohrung des Verbindungsteils eingeschoben und dann das abgewinkelte Ende der Brücke des Wischerarms in eine längsachsenparallele Ausnehmung innerhalb des Verbindungsteils eingetaucht wird. Die Stirnfläche des Gelenkstifts und die beiden Seitenflächen des abgewinkelten Brückenendes bilden also jetzt die Anschlagsflächen gegenüber dem Verbindungsteil bzw. gegenüber dem damit verbundenen Wischblatt.

Durch die genaue Führung des Gelenkstifts bzw. des Brückenendes in der passend dimensionierten Bohrung bzw. Ausnehmung des Verbindungsteils ist es nicht länger nötig, die quer verlaufende Brücke des Wischerarms zusätzlich in einer Quernut des Adapters, wie es aus dem Stand der Technik bekannt ist, zu lagern.

In einer vorteilhaften Ausführung der vorliegenden Erfindung ist an der Oberseite des Verbindungsteils ein flacher Decksteg angeformt, der seitlich rechtwinklig vom Grundkörper abbiegt. Im montierten Zustand liegt der Decksteg mit seiner Unterseite auf einer Seitenwand des Anschlussteils auf. Dieser Anschlag erleichtert nicht nur die Montage sondern ermöglicht auch eine drehfeste Verbindung von Verbindungsteil und Anschlussteil. Somit treten zwischen Verbindungsteil und Anschlussteil auch keine unerwünschten Reibkräfte auf.

In einer weiteren vorteilhaften Ausführung der vorliegenden Erfindung kann für den Benutzer eine schnelle und passgenaue Montage von Anschlussteil und Verbindungsteil, vor allem was die fluchtende Ausrichtung der jeweiligen Bohrungen von Anschlussteil und Verbindungsteil angeht, dadurch erreicht werden, dass das Verbindungsteil einen Seitensteg besitzt. Dieser Seitensteg ist vom Decksteg senkrecht nach unten abgewinkelt und taucht im montierten Zustand in das Anschlussteil ein, wobei es in seinen Abmessungen an den Innenhohlraum des Anschlussteils angepasst ist. Damit kann vorteilhafterweise auf federelastische Elemente, zum Beispiel Rastzungen, Clips, am Verbindungsteil verzichtet werden, wie sie im Stand der Technik zur positionsstabilen und drehfesten Verbindung mit dem Wischblatt verwendet werden.

In noch einer weiteren vorteilhaften Ausführung der vorliegenden Erfindung ist die Wand der blinden Bohrung im Verbindungsteil bereichsweise entfernt, so dass die blinde Bohrung zu einer Längsseite bereichsweise offen ist. Auf diese Weise wird die Kontaktfläche zwischen Gelenkstift des Wischerarms und Bohrungswandungen des Verbindungsteils und somit die Reibfläche zwischen Wischerarm und Verbindungsteil noch weiter reduziert.

Ein weiterer Vorteil der vorliegenden Erfindung ist es, dass durch Verwendung des erfindungsgemäßen Verbindungsteils ein Flachwischblatt mit einem vorab nicht kompatiblen Anschlussteil an einen handelsüblichen Wischerarm adaptiert werden kann. Die Erweiterung des Einsatzbereiches für ein Produkt, wie das hier verwendete Flachwischblatt, ist immer gleichbedeutend mit einer Reduzierung der Kosten, was dem Kunden zugute kommt.

Mit den nachfolgenden Zeichnungen soll die vorliegende Erfindung anhand eines Ausführungsbeispiels genauer beschrieben werden.

Es zeigen
- Fig. 1a bis 1d: vier Ansichten eines Verbindungsteils,
- Fig. 2a und 2b: zwei perspektivische Ansichten der Montage des Verbindungsteils am Anschlussteil des Wischblatts,
- Fig. 2c: eine Ansicht auf einen entlang der Linie II-II in Fig. 2b geführten Schnitt,
- Fig. 3a bis 3d: vier perspektivische Ansichten der Montage des Wischerarms am Wischblatt mit Verbindungsteil,
- Fig. 4a und 4b: eine montierte Anschlussvorrichtung in zwei perspektivischen Darstellungen.

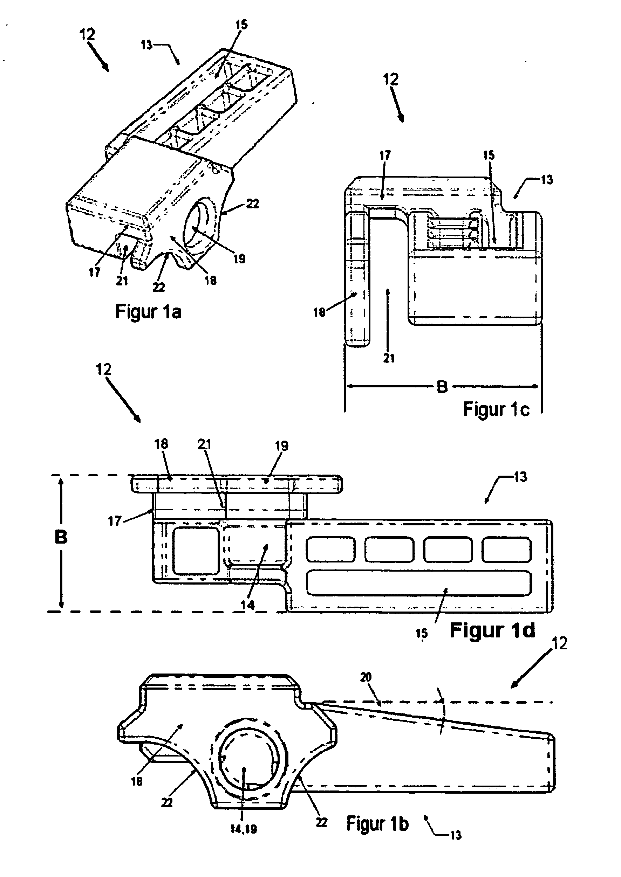

In den Fig. 1a bis 1d ist ein Ausführungsbeispiel für das erfindungsgemäße Verbindungsteil 12 in vier verschiedenen Ansichten dargestellt. Fig. 1a zeigt das Verbindungsteil 12 in einer Isometrieansicht, Fig. 1b in Seitenansicht in der Montagelage, Fig. 1c in Rückansicht in der Montagelage und Fig. 1d in Unteransicht in der Montagelage.

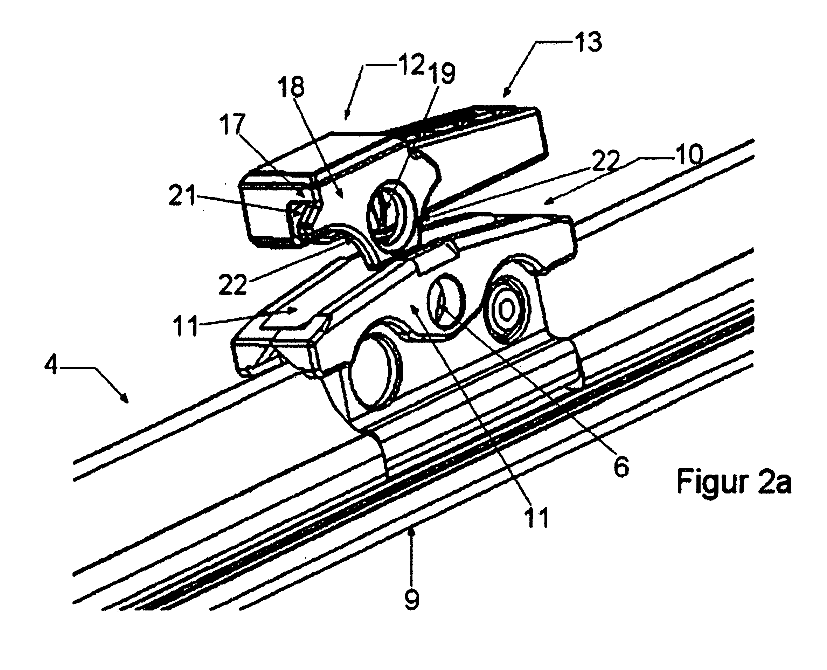

Montagelage bedeutet, dass das Verbindungsteil 12 in der Ausrichtung dargestellt ist, in der es später gemäß Fig. 2a bis 2c in ein auf dem Wischblatt befestigtes Anschlussteil 10 eingesetzt wird. Die Seitenansicht in der Fig. 1b stellt demnach das Verbindungssteil 12 in Richtung parallel der Längserstreckung des Wischblatts 4 dar.

Der Aufbau des Verbindungsteils 12 lässt sich in zwei Abschnitte unterteilen. Aus der Ansicht der Fig. 1c ist deutlich erkennbar, dass sich das Hauptvolumen des Verbindungstells 12 auf einen Grundkörper 13 konzentriert, der sich in der Fig. 1c rechts eines Längsschlitzes 21 erstreckt. Dieser Grundkörper 13 hat wie aus den Ansichten der Fig. 1b und 1d hervorgeht eine annähernd kubische langgestreckte Außenform.

Von diesem Grundkörper 13 durch einen Längsschlitz 21 getrennt befindet sich ein im Verhältnis zum Grundkörper 13 dünnwandiger Seitensteg 18. Dieser Seitensteg 18 verläuft parallel versetzt zum Grundkörper 13, so dass der Längsschlitz 21 eine einheitliche Breite aufweist.

Der Seitensteg 18 ist mit dem Grundkörper 13 über einen Decksteg 17 verbunden, der den Längsschlitz 21 nach oben abschließt. Die Länge des Deckstegs 17 und somit die Breite des Längsschlitzes 21 entspricht annähernd der Seitenwanddicke des Anschlussteils 10, in welches das Verbindungsteil 12 nach Fig. 2a bis 2c eingesetzt wird.

Der Decksteg 17 schließt an der Oberkante von Grundkörper 13 und Seitensteg 18 bündig an, wobei der Seitensteg 18 vom Decksteg 17 rechtwinklig nach unten abgewinkelt ist und sich soweit nach unten erstreckt, dass sich die Unterkante des Seitenstegs 18 etwas unterhalb der Unterkante des Grundkörpers 13 befindet (siehe Fig. 1c).

Der Seitensteg 18 besitzt an seinen beiden unteren Ecken radiale Ausschnitte 22, die wie später erläutert wird, mit entsprechenden Gegenelementen des Anschlussteils 10 zusammenwirken.

Der Grundkörper 13 ist gemäß Fig. 1b und 1d deutlich länger als der Seitensteg 18. Der Grundkörper 13 weist in etwa die doppelte Länge des Seitenstegs 18 auf.

Der Seitensteg 18 mit dem verbindenden Decksteg 17 schließt bündig an einem Längsende des Grundkörpers 13 an, so dass der Grundkörper 13 wiederum in zwei Abschnitte unterteilt werden kann, in einen Abschnitt der gegenüber dem Seitensteg 18 liegt und in einen Abschnitt der in seiner Längserstreckung über die Seitensteg 18 - Länge hinausgeht. In diesem zuletzt genannten Bereich weist der Grundkörper 13 mehrere vertikale Durchgangsöffnungen auf. Zum einen besitzt der Grundkörper 13 hier eine durch Quer- und Längsrippen begrenzte offene Zellstruktur. Des weiteren weist der Grundkörper 13 neben diesen offenen Zellen eine zur Längserstreckung parallele Ausnehmung 15 auf, die wie in der Unteransicht von Fig. 1d besonders gut erkennbar ist, im Querschnitt rechteckig begrenzt ist.

Diese Ausnehmung 15 erstreckt sich über die fast komplette Länge des Grundkörpersegmentes, der über die Längserstreckung des Seitenstegs 18 hervorsteht. Dabei hat die Ausnehmung 15 eine im Verhältnis zur Länge geringe Breite.

Außerdem weist der in Längsrichtung über den Seitensteg 18 hinausgehende Teil des Grundkörpers 13 au seiner Oberfläche eine Schrägneigung in Bezug auf die Horizontale auf, wie aus Fig. 1c deutlich hervorgeht. Diese Schrägneigung 20 beträgt 6 bis 8 Grad und soll im montierten Zustand die Verbiegung des Flachwischblatts 4 durch die Anlage an der Scheibe so kompensieren, dass die Oberfläche des Grundkörpers 13 dann parallel zur Brücke 7 des Wischerarmendes 3 verläuft.

Der Seitensteg 18 des Verbindungsteils 12 weist in Querrichtung eine zylindrische Durchgangsbohrung 19 auf. In Querrichtung mit dieser Durchgangsbohrung 19 fluchtend und durch den Längsschlitz 21 von dieser Durchgangsbohrung 19 getrennt ist eine blinde Bohrung 14 im Grundkörper 13 eingebracht. Diese blinde Bohrung 14 ist ebenfalls zylindrisch und weist den gleichen Durchmesser wie die Durchgangsbohrung 19 durch den Seitensteg 18 auf.

Wie aus Fig. 1d deutlich wird, ist die blinde Bohrung 14 bereichsweise zu einer Längsseite offen, weil die Höhe des Grundkörpers 13 in diesem Bereich nicht ausreicht, um den ganzen Bohrungsdurchmesser aufzunehmen. Die blinde Bohrung 14 ist dabei in etwa noch zur Hälfte im Grundkörper 13 ausgebildet. Die Breite des Verbindungsteils 12, die gemäß Fig. 1c und 1d von der dem Grundkörper abgewandten Außenseite des Seitenstegs 18 bis zur maximal davon entfernten sich parallel dazu erstreckenden und vom Seitensteg 18 abgewandten Außenseite des Grundkörpers 13 gemessen wird, beträgt weniger als 16 mm, bevorzugt 15,5 mm.

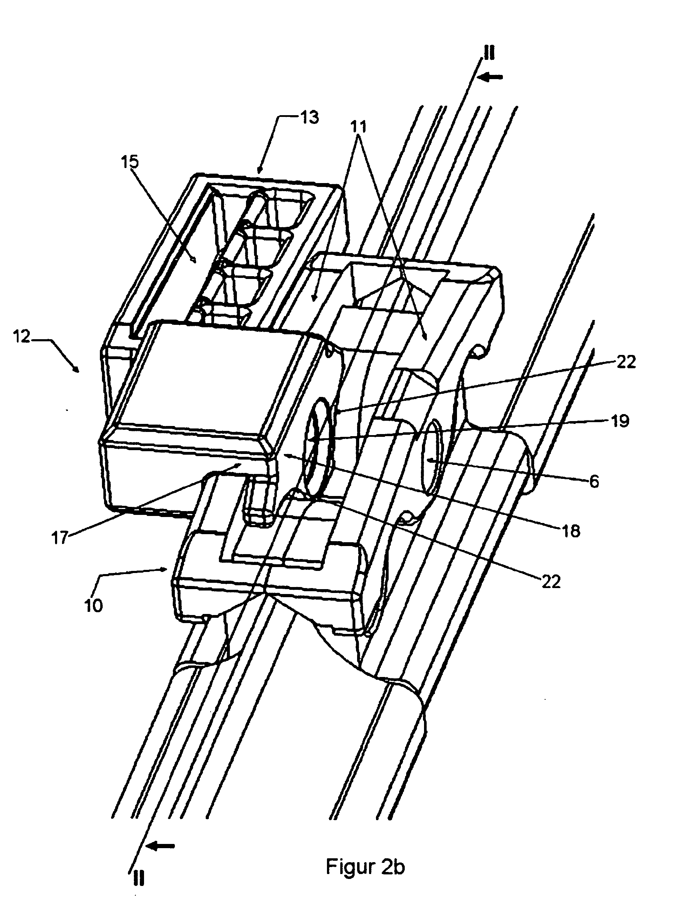

In den Fig. 2a und 2b ist in zwei perspektivischen Ansichten abgebildet, wie das in den Fig. 1a bis 1d noch einzeln dargestellte Verbindungsteil 12 in ein Anschlussteil 10 eines Wischblatts 4 montiert wird.

Bei dem hier verwendeten Wischblatt 4 handelt es sich um ein Flachwischblatt, das aus einem an der Scheibe anlegbaren Wischgummi 9 und aus einem Tragmittel besteht, das oberhalb des Wischgummi 9 angebracht ist und dieses unterstützt, wobei dieses Tragmittel vorzugsweise eine bandartig langgestreckte Federschiene ist. In den hier dargestellten Abbildungen ist dieses Tragmittel nicht erkennbar, weil es von einer Spoilerabdeckung überdeckt ist.

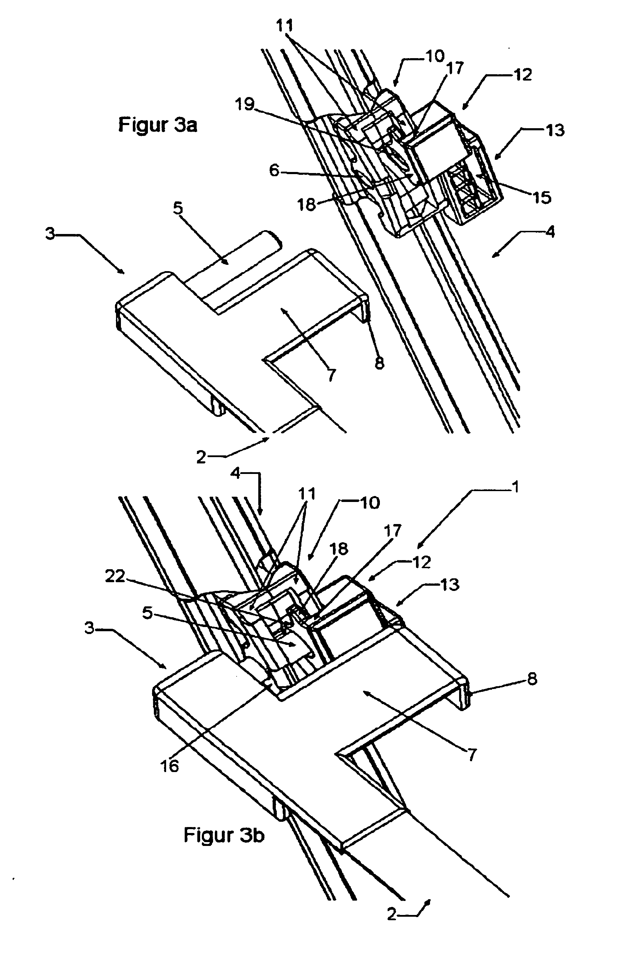

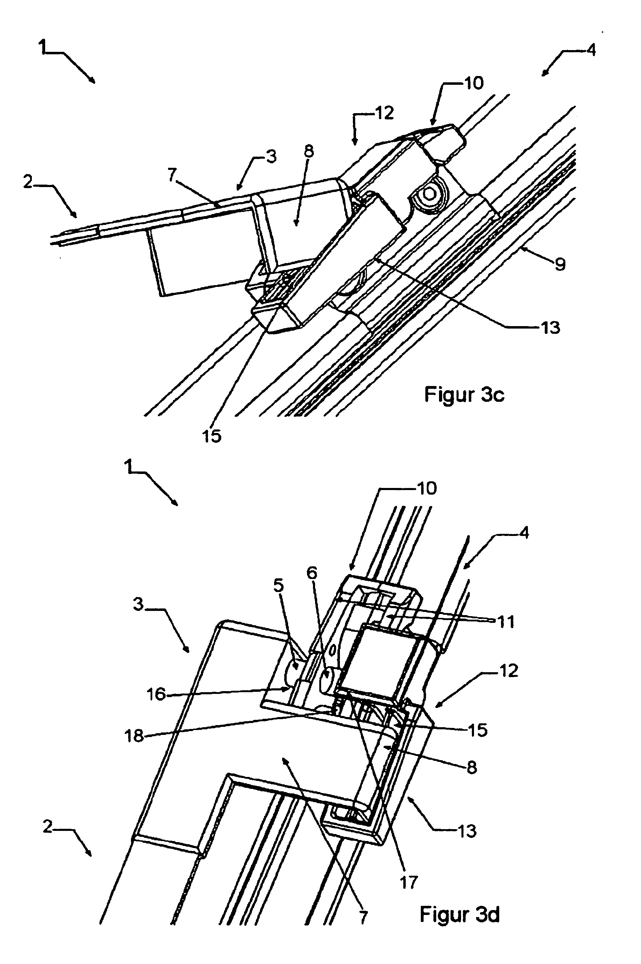

Zentral am Wischblatt 4 ist ein Anschlussteil 10 angebracht, das unlösbar am Tragmittel befestigt ist, beispielsweise durch eine Nietverbindung. Im Bereich des Anschlussteils 10 ist die Spoilerabdeckung des Wischblatts unterbrochen. Über dieses Anschlussteil 10 erfolgt die Verbindung mit dem Wischerarmende 3 (siehe Fig. 3a bis 3d). Um jedoch diese Verbindung mit dem hier vorliegenden Wischerarmende 3 realisieren zu können, ist es zunächst notwendig, das Verbindungsteil 12 an das Anschlussteil 10 zu koppeln. Dieser Vormontagevorgang ist in den Fig. 2a bis 2c dargestellt.

Das Anschlussteil 10 ist in Bezug zur Quer- und Längsmittelachse symmetrisch und wurde aus zwei Längshälften zusammengesetzt. Diese Zweiteilung ist noch anhand der Trennlinie, die der Längsmittelachse entspricht, zu erkennen. Die Seitenwände 11 des Anschlussteils 10 weisen eine Länge auf, die etwa 3 bis 4 Mal größer als die Breite der Stirnwände ist.

Die Seiten- 11 und Stirnwände des Anschlussteils 10 sind dabei nicht glatt ausgeführt, sondern besitzen am oberen Ende jeweils kragenförmig nach außen einen Überstand.

Zentral im oberen kragenförmig ausgebildeten Bereich der Seitenwände des Anschlussteils 10 ist jeweils eine zylindrische Durchgangsbohrung 6 eingebracht, wobei die beiden Bohrungen 6 in Querrichtung fluchtend zueinander angeordnet sind. Der Durchmesser dieser Bohrungen 6 entspricht dabei in etwa dem Durchmesser der Bohrungen 14, 19 im Seitensteg 18 und Grundkörper 13 des Verbindungsteils 12.

Gemäß Fig. 2a und 2b wird das Verbindungsteil 12 von oben in das Anschlussteil 10 eingesetzt. Dabei wird eine Seitenwand 11 des Anschlussteils 10 in den Längsschlitz 21 des Verbindungsteils 12 eingeführt, bis die Unterseite des Deckstegs 17 des Verbindungsteils 12 auf der Oberseite der Seitenwand 11 des Anschlussteils 10 aufliegt.

Das Verbindungsteil 12 ist dabei so ausgerichtet, dass der Seitensteg 18 in den Innenhohlraum des Anschlussteils 10 eintaucht, während der Grundkörper 13 seitlich außen anliegt.

Die Breite des Längsschlitzes 21 des Verbindungsteils 12 ist dabei so an die Breite der Seitenwand 11 des Anschlussteils 10 angepasst, dass nach Einsetzen möglichst kein Spiel mehr zwischen Anschlussteil 10 und Verbindungsteil 12 besteht.

Nach dem Einsetzen des Verbindungsteils 12 in das Anschlussteil 10 ist besonders wichtig, dass die Bohrungen 6 in den Seitenwänden 11 des Anschlussteils 10 zu den Bohrungen 14, 19 im Verbindungsteil 12 fluchten. Diese Voraussetzung muss erfüllt sein, damit später entsprechend den Fig. 3a bis 3d ein am Wischerarmende 3 vorgesehener Gelenkstift 5 eingeschoben werden kann.

Um diese unabdingbare passgenaue Positionierung der Bohrungen 6, 14, 19 für den Benutzer zu erleichtern, weist der Seitensteg 18 des Verbindungsteils 12 charakteristische Ausschnitte 22 an seinen unteren Ecken auf.

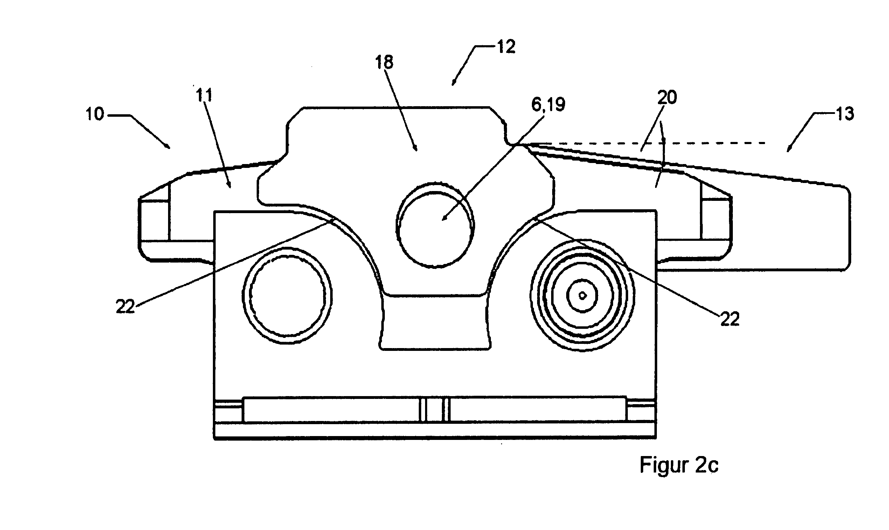

Fig. 2c stellt einen Längsschnitt entlang der Linie II-II aus Fig. 2b dar und macht sichtbar, wie der Seitensteg 18 im Innenhohlraum des Anschlussteils 10 eintaucht. Die Außenkontur 22 des Seitenstegs 18 ist dabei formkomplementär zur Innenkontur des Anschlussteils 10 ausgebildet, so dass das Verbindungsteil 12 nur in einer bestimmten Längsposition zum Anschlussteil 10 eingesetzt werden kann. In dieser definierten Längsposition fluchten die Bohrungen 6, 14, 19 von Anschlussteil 10 und Verbindungsteil 12 in Querrichtung zueinander, und der Wischerarm 2 kann jetzt montiert werden.

Durch die Fig. 2c wird auch die Funktion des Seitenstegs 18 verdeutlicht. Er stellt eine Montagehilfe dar, ist aber keineswegs ein unverzichtbares Funktionselement des erfindungsgemäßen Verbindungsteils 12. Es wäre auch vorstellbar, ein Verbindungsteil 12 ohne Seitensteg 18 und nur mit Decksteg 17 zu verwenden, wobei zur Montage der Decksteg 17 dann auf die Oberseite einer Seitenwand 11 des Anschlussteils 10 angelegt würde. Allerdings müsste der Benutzer das Anschlussteil 10 dann so lange verschieben, bis die blinde Bohrung 14 des Verbindungsteils 12 fluchtend zu den Seitenwandbohrungen 6 des Anschlussteils 10 angeordnet wäre. Dies würde rein visuell geschehen und wäre dementsprechend etwas aufwändiger. Auch eine solche Lösung ist durch die vorliegende Erfindung mit beansprucht.

Schließlich könnte nicht nur auf den Seitensteg 18 sondern auch noch auf den Decksteg 17 verzichtet werden. Dann würde das Verbindungsteil 12 nur noch aus dem außen anliegenden Grundkörper 13 mit blinder Bohrung 14 und Längs-Ausnehmung 15 bestehen. Auch hier würde die Längspositionierung wie im Vorhergehenden beschrieben geschehen. Allerdings wäre durch den fehlenden Decksteg 17 keine formschlüssige Verbindung hinsichtlich der drehenden Ausgleichsbewegung um die Querbohrungsachse gegeben. Die Vorteile einer drehfesten Verbindung werden aus den Beschreibungen zu den Fig. 3a bis 3d deutlich. Trotzdem ist auch eine solche Lösung durch die vorliegende Erfindung mit beansprucht.

Die Fig. 3a bis 3d zeigen, wie bei dem erfindungsgemäßen Scheibenwischer 1 das mit dem Verbindungsteil 12 ausgerüstete Wischblatt 4 an einem Wischerarm 2 nach der EP 1 098 796 montiert wird.

In Fig. 3a sind Wischerarm 2 und Wischblatt 4 voneinander getrennt dargestellt. Das Wischblatt 4 ist gemäß der durch die Fig. 2a bis 2c erläuterten Montageweise mit dem Verbindungsteil 12 versehen. Der Wischerarm 2 nach der EP 1 098 796 hat zur seitlichen Befestigung an ein Wischblatt 4 an seinem Ende 3 entsprechende Kupplungsmittel. Zu den Kupplungsmitteln gehören ein zylindrischer Gelenkstift 5, der in Querrichtung vom Wischerarmende 3 ausgeht und einen Durchmesser kleiner oder gleich den Bohrungsdurchmessern 6, 14, 19 von Verbindungsteil 12 und Anschlussteil 10 besitzt, und eine parallel dazu versetzte Brücke 7, die ein L - förmig nach unten abgewinkeltes Ende 8 aufweist. Der Abstand vom freien Ende des Wischerarms 2 zum Gelenkstift 5 ist dabei kleiner als der Abstand vom freien Ende des Wischerarms 2 zur Brücke 7.

Zur Verbindung von Wischblatt 4 und Wischerarm 2 ist gemäß Fig. 3a das Wischblatt 4 zunächst derart zum Wischerarm 2 zu positionieren, dass das abgewinkelte Ende 8 der Brücke 7 das Einschieben des Gelenkstifts 5 des Wischerarms 2 in die Öffnungen 6, 14, 19, des Wischblatts 4 nicht behindert. Diese verschwenkte Montagestellung von Wischerarm 2 und Wischblatt 4 ist in den Fig. 3a und 3b dargestellt.

Gemäß Fig. 3b kann nur bei dieser Stellung von Wischerarm 2 und Wischblatt 4 der Gelenkstift 5 in die Bohrung 6 des Wischblatts 4 eingeführt werden. Dementsprechend durchquert beim Aufschieben des Wischerarms 2 auf das Wischblatt 4 der Gelenkstift 5 zunächst die Durchgangsbohrung 6 der freien Seitenwand 11 des Anschlussteils 10, dann den freien Innenhohlraum des Anschlussteils 10, dann die Durchgangsbohrung 19 des Seitenstegs 18 des Verbindungsteils 12 und dann die Durchgangsbohrung 6 der vom Verbindungsteil 12 umgriffenen Seitenwand 11 des Anschlussteils 10, bevor er in die blinde Bohrung 14 im Grundkörper 13 des Verbindungsteils 12 eintritt. Der Gelenkstift 5 wird so weit seitlich eingeschoben, bis er am Boden der blinden Bohrung 14 zum Anschlag kommt. Diese Montagezwischenstellung ist in Fig. 3b dargestellt.

Weiter ist aus Fig. 3b sichtbar, dass die Länge der blinden Bohrung 14 so auf die Länge des Gelenkstifts 5 abgestimmt ist, dass ein Abstand 16 zwischen der dem Wischblatt 4 zugewandten Längsseite des Wischerarmendes 3 und der dem Wischerarmende 3 zugewandten Längsseite des Anschlussteils 10 bestehen bleibt.

Des weiteren ist der Innendurchmesser der Bohrungen 6, 14, 19 in Anschlussteil 10 und Verbindungsteil 12 passgenau oder annähernd passgenau zum Außendurchmesser des Stifts 5 am Wischerarmende 3 dimensioniert, so dass bereits nach Einführung des Stifts 5 das Wischblatt 4 in Längsrichtung zentriert zum Wischerarm 2 gehalten wird

Aus dieser Montagezwischenstellung nach Fig. 3b kann der Wischerarm 2 nun zum Erreichen der endgültigen Betriebsstellung nach Fig. 3d um die Gelenkachse zurückgeschwenkt werden. Auch hierbei sind die Abmessungen des Verbindungsteils 12 so auf das Wischerarmende abgestimmt, dass beim Zurückschwenken des Wischerarms 2 das L - förmig abgewinkelte Ende 8 der Brücke 7 des Wischerarms 2 in die Ausnehmung 15 im Grundkörper 13 des Verbindungsteils 12 eintaucht. Die Höhe des Brückenendes 8 ist dabei so groß, dass dieses teilweise aus der Ausnehmung 15 des Grundkörpers 13 nach unten heraustritt.

Es ist ersichtlich, dass der Anschlag des Gelenkstifts 5 am Ende der Blindbohrung 14 exakt mit der Position der Ausnehmung 15 abgestimmt sein muss, damit das Brückenende 8 bei der Montage dort ohne Widerstand eintauchen kann.

In Fig. 3d ist schließlich in einer perspektivischen Ansicht von schräg oben der Scheibenwischer 1 in seiner Betriebsstellung dargestellt, in welcher das Wischgummi 9 des Wischblatts 4 an der Fahrzeugscheibe anliegt. Ein axiales Herauslösen, das bedeutet ein Herauslösen in Richtung des Gelenkstifts 5, des Wischblatts 4 vom Wischerarm 2 ist nicht länger möglich, weil das Brückenende 8 in der Ausnehmung 15 des Verbindungsteils 12 geführt ist und somit eine seitliche Bewegung zwischen Wischblatt 4 und Wischerarm 2 verhindert. Das Verbindungsteil 12 wird von der Brücke 7 des Wischerarmendes 3 jeweils entgegen der vertikalen Lösekraft mit einer Haltekraft beaufschlagt. Somit ist eine betriebssichere Verbindung zwischen Wischblatt 4 und Wischerarm 2 in der Betriebsstellung gegeben.

Eine vor allem während des Wischvorgangs stattfindende pendelnde Ausgleichsbewegung zwischen Wischblatt 4 und Wischerarm 2 um die Gelenkstiftachse bleibt aber weiterhin möglich. Dadurch, dass kein direkter Kontakt mehr zwischen der Längsseite des Wischerarmendes 3 und der Längsseite des Wischblatts 4, bzw. des Anschlussteils 10, mehr besteht, kann diese Pendelbewegung mit reduzierten Reibungskräften und demzufolge leichtgängiger erfolgen.

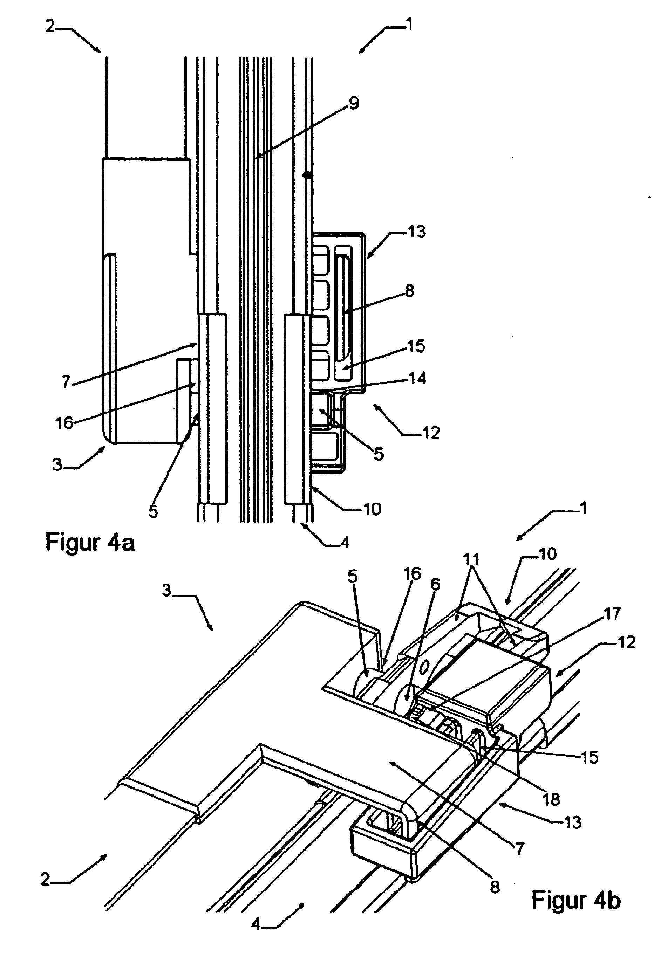

In den Fig. 4a und 4b ist die erfindungsgemäße, montierte Anschlussvorrichtung von Wischerarm 2 und Wischblatt 4 in Betriebsstellung zunächst in einer Unteransicht nach Fig. 4a, also von der Wischgummi 9 - Seite aus, und dann in einer isometrischen Ansicht von oben nach Fig. 4b dargestellt.

Hier ist nochmals deutlich der Abstand 16 zwischen Wischerarmende 3 und Wischblatt 4 erkennbar. Die Seitenwände der Ausnehmung 15 beschränken im Zusammenspiel mit den beiden Seitenflächen des eintauchenden abgewinkelten Brückenendes 8 die seitliche Bewegung in beiden Richtungen zwischen Wischerarm 2 und Wischblatt 4 und sorgen somit für eine axiale Verriegelung und eine definierte seitliche Positionierung von Wischerarm 2 und Wischblatt 4 zueinander.

Bei der hier beschriebenen Verbindungsanordnung handelt es sich um ein bevorzugtes Ausführungsbeispiel, auf das die vorliegende Erfindung aber keineswegs beschränkt werden soll. Durch die vorliegende Erfindung soll die Querverriegelung bei seitlichen Anschlusssystemen zwischen Wischerarm 2 und Wischblatt 4 gestaltet werden. Diese soll allein die Brücke 7, 8 des Wischerarmendes 3 bewirken, indem deren abgewinkeltes Ende 8 in die entsprechend gestaltete Öffnung 15 des Verbindungsteils 12 eintaucht.

In der Fig. 4a ist besonders deutlich zu sehen, dass die blinde Bohrung 14 im Grundkörper 13 des Verbindungsteils 12 die Quereinführung des Wischerarms 2 in das Wischblatt 4 begrenzt, indem die Stirnfläche des eingeführten Stifts 5 von Wischerarmende 3 am Boden der blinden Bohrung 14 anschlägt. Außerdem ist der Durchmesser der Bohrungen 6, 14, 19 in Anschlussteil 10 und Verbindungsteil 12 so an den Außendurchmesser des eingeführten Stifts 5 angepasst, dass das Wischblatt 4 in Bezug zum Wischerarm 2 in Längsrichtung zentriert gehalten wird.

Durch den Anschlag des Gelenkstifts 5 des Wischerarmendes 3 am Ende der blinden Bohrung 14 des Verbindungsteils 12 wird eine falsche Montage, die eventuell die herkömmlichen Anschlagsflächen zwischen Wischerarmlängsseite und Innenseite der Brücke 7 beanspruchen würde, auf jeden Fall verhindert. Es bleibt bedingt durch den Anschlag des Gelenkstifts 5 in der blinden Bohrung 14 immer ein Abstand 16 zwischen Wischerarmende 3 und Verbindungsteil 12, bzw. Wischblatt 4.

## Patentansprüche

1. Scheibenwischer (1), insbesondere für eine Scheibe eines Kraftfahrzeugs, mit einem antreibbaren Wischerarm (2), an dessen freien Ende (3) seitlich, quer zur Längsrichtung und zu einem Wischblatt (4) zeigend ein Stift (5) zum gelenkigen Verbinden des Wischblatts (4) befestigt ist, der in einer Durchgangsöffnung (6) des Wischblatts (4) steckt und in einer montierten Stellung durch eine Brücke (7) axial verriegelt ist, die parallel zum Stift (5) am Wischerarm (2) angeordnet ist und mit einem abgewinkelten Ende (8) das Wischblatt (4) übergreift, wobei das an dem Wischerarm (2) anordenbare Wischblatt (4) ein Flachwischblatt ist, das ein Wischgummi (9), ein das Wischgummi (9) unterstützendes Tragmittel, welches vorzugsweise in Form einer bandartig langgestreckten Federschiene ausgebildet ist, und ein am Wischblatt (4) zentral angeordnetes Anschlussteil (10) umfasst, **gekennzeichnet durch** die folgenden Merkmale:
-- das Anschlussteil (10) des Wischblatts (4) besitzt einen kastenförmigen nach oben offenen Aufbau aus vier Stirn- und Seitenwänden (11), wobei die zwei parallel zur Längserstreckung des Wischblatts (4) ausgerichteten und einander gegenüberliegenden Seitenwände (11) des Anschlussteils (10) miteinander fluchtende Durchgangsbohrungen (6) aufweisen,
-- im montierten Zustand besteht zwischen der dem Wischblatt (4) zugewandten Längsseite des Wischerarmendes (3) und der dem Wischerarm (2) zugewandten Längsseite der Anschlussteils (10) des Wischblatts (4) ein Abstand (16),
-- zur betriebssicheren Verbindung des Wischblatts (4) mit dem Wischerarm (2) ist an das Anschlussteil (10) des Wischblatts (4) ein Verbindungsteil (12) anbringbar, wobei dieses Verbindungsteil (12) einen Grundkörper (13) umfasst, **dadurch gekennzeichnet, daß** der Grundkörper (13)
-- an der dem Wischerarm (2) abgewandten Außenseite des Anschlussteils (10) anliegt,
-- eine mit den Durchgangsbohrungen (6) des Anschlussteils (10) fluchtende blinde Bohrung (14) aufweist, die den Stift (5) des Wischerarmendes (3) aufnimmt, wobei im montierten Zustand die Stirnfläche des Stifts (5) am Boden der blinden Bohrung (14) anliegt, und
-- eine parallel zur Wischblatt (4) - Längsachse verlaufende Ausnehmung (15) besitzt, die das abgewinkelte Ende (8) der Brücke (7) des Wischerarmendes (3) aufnimmt.

2. Scheibenwischer nach Anspruch 1, **dadurch gekennzeichnet, dass** am Grundkörper (13) des Verbindungsteils (12) ein Decksteg (17) angeformt ist, der sich quer zur Wischblatt (4) - Längsachse in Richtung des Wischerarmendes (3) erstreckt, wobei dieser Decksteg (17) im montierten Zustand auf dem Anschlussteil (10) aufliegt.

3. Scheibenwischer nach Anspruch 2, **dadurch gekennzeichnet, dass** vom Decksteg (17) des Verbindungsteils (12) ein Seitensteg (18) senkrecht abgewinkelt ist, der in das Anschlussteil (10) eintaucht.

4. Scheibenwischer nach Anspruch 3, **dadurch gekennzeichnet, dass** der Seitensteg (18) eine mit der blinden Bohrung (14) im Grundkörper (13) fluchtende Durchgangsbohrung (19) aufweist.

5. Scheibenwischer nach Anspruch 4, **dadurch gekennzeichnet, dass** die Abmessungen des Seitenstegs (18) so an das Anschlussteil (10) angepasst sind, dass im montierten Zustand die Bohrungen (6, 14, 19) von Anschlussteil (10) und Verbindungsteil (12) passgenau zueinander positioniert sind.

6. Scheibenwischer nach einem der vorhergehenden Ansprüche, **dadurch gekennzeichnet, dass** der Innendurchmesser der Bohrungen (6, 14, 19) in Anschlussteil (10) und Verbindungsteil (12) passgenau oder annähernd passgenau zum Außendurchmesser des Stifts (5) am Wischerarmende (3) dimensioniert ist.

7. Scheibenwischer nach einem der vorhergehenden Ansprüche, **dadurch gekennzeichnet, dass** die Oberfläche des Grundkörpers (13) des Verbindungsteils (12) eine im montierten Zustand schräg nach unten in Richtung des Wischgummis (9) weisende Neigung (20) besitzt, so dass im Betriebszustand des Scheibenwischers (1) bei an die Scheibe angedrücktem Wischblatt (4) die Oberfläche des Grundkörpers (13) annähernd parallel zur Ebene der Brücke (7) verläuft.

8. Scheibenwischer nach einem der vorhergehenden Ansprüche, **dadurch gekennzeichnet, dass** die Wand der blinden Bohrung (14) im Grundkörper (13) des Verbindungsteils (12) bereichsweise entfernt ist, so dass die blinde Bohrung (14) zu einer Längsseite bereichsweise offen ist.

9. Scheibenwischer nach einem der vorhergehenden Ansprüche, **dadurch gekennzeichnet, dass** die Breite (B) des Verbindungsteils (12) weniger als 16 mm beträgt.

10. Scheibenwischer nach einem der vorhergehenden Ansprüche, **dadurch gekennzeichnet, dass** die parallel zur Wischblatt (4) - Längsachse verlaufende Ausnehmung (15) im Grundkörper (13) des Verbindungsteils (12) eine vertikal durch den Grundkörper (13) durchgehende Öffnung ist, so dass im montierten Zustand das abgewinkelte Ende (8) der Brücke (7) des Wischerarms (2) teilweise aus dem Verbindungsteil (12) nach unten heraustritt.

11. Scheibenwischer nach einem der vorhergehenden Ansprüche, **dadurch gekennzeichnet, dass** der Grundkörper (13) des Verbindungsteils (12) eine zellenförmige offene Struktur mit Längs- und Querrippen aufweist.

## Claims

1. A screen wiper (1), in particular for a windscreen of a motor vehicle, with a wiper arm (2) which can be driven and at the free end (3) of which a pin (5) is secured laterally, transversely to the longitudinal direction and facing towards a wiper blade (4), which pin serves for the pivotable connection of the wiper blade (4) and fits into a through-opening (6) of the wiper blade (4) and in an assembled position is locked axially by a bridge (7) which is disposed parallel to the pin (5) on the wiper arm (2) and overlaps the wiper blade (4) with a bent end (8), wherein the wiper blade (4) which can be mounted on the wiper arm (2) is a flat wiper blade which comprises a wiper rubber (9), a support means supporting the wiper rubber (9), which is preferably in the form of an elongated band-like spring blade, and a connector (10) arranged centrally on the wiper blade (4), **characterised by** the following features:
-- the connector (10) of the wiper blade (4) is of box-like upwardly open construction consisting of four end and side walls (11), wherein the two side walls (11) of the connector (10), which are aligned parallel to the longitudinal extension of the wiper blade (4) and are situated opposite one another, have mutually aligned through-holes (6),
-- in the assembled condition, a distance (16) is present between the longitudinal side of the wiper arm end (3) facing the wiper blade (4) and the longitudinal side of the connector (10) of the wiper blade (4) facing the wiper arm (2),
-- for the reliable connection of the wiper blade (4) to the wiper arm (2) a connecting member (12) can be attached to the connector (10) of the wiper blade (4), wherein this connecting member (12) comprises a body (13),
**characterised in that** the body (13)
-- abuts against the outside of the connector (10) facing away from the wiper arm (2),
-- has a blind hole (14) which is aligned with the through-holes (6) of the connector (10) and which accommodates the pin (5) of the wiper arm end (3), wherein in the assembled condition the end face of the pin (5) abuts against the bottom of the blind hole (14), and
-- has a recess (15) which extends parallel to the wiper blade (4) longitudinal axis and which accommodates the bent end (8) of the bridge (7) of the wiper arm end (3).

2. A screen wiper according to Claim 1, **characterised in that** a cover web (17) is formed on the body (13) of the connecting member (12), which extends transversely to the wiper blade (4) longitudinal axis in the direction of the wiper arm end (3), wherein in the assembled condition this cover web (17) bears on the connector (10).

3. A screen wiper according to Claim 2, **characterised in that** a lateral web (18) is bent perpendicularly from the cover web (17) of the connecting member (12) and penetrates into the connector (10).

4. A screen wiper according to Claim 3, **characterised in that** the lateral web (18) has a through-hole (19) in alignment with the blind hole (14) in the body (13).

5. A screen wiper according to Claim 4, **characterised in that** the dimensions of the lateral web (18) are so adapted to the connector (10) that, in the assembled condition, the holes (6,14,19) of the connector (10) and the connecting member (12) are positioned accurately fitting with one another.

6. A screen wiper according to any one of the preceding Claims, **characterised in that** the dimensions of the inner diameter of the holes (6,14,19) in the connector (10) and the connecting member (12) are accurately fitting or approximately accurately fitting with the outer diameter of the pin (5) on the wiper arm end (3).

7. A screen wiper according to any one of the preceding Claims, **characterised in that** the surface of the body (13) of the connecting member (12) has an inclination (20) which, in the assembled condition, points obliquely downwards in the direction of the wiper rubber (9) so that in the operating condition of the screen wiper (1), with the wiper blade (4) applied against the screen, the surface of the body (13) extends approximately parallel to the plane of the bridge (7).

8. A screen wiper according to any one of the preceding Claims, **characterised in that** the wall of the blind hole (14) in the body (13) of the connecting member (12) is sectionally removed so that the blind hole (14) is sectionally open to one longitudinal side.

9. A screen wiper according to any one of the preceding Claims, **characterised in that** the width (B) of the connecting member (12) is less than 16 mm.

10. A screen wiper according to any one of the preceding Claims, **characterised in that** the recess (15) in the body (13) of the connecting member (12) extending parallel to the wiper blade (4) longitudinal axis is an opening passing through the body (13) so that, in the assembled condition, the bent end (8) of the bridge (7) of the wiper arm (2) partly protrudes downwards from the connecting member (12).

11. A screen wiper according to any one of the preceding Claims, **characterised in that** the body (13) of the connecting member (12) has a cellular open structure with longitudinal and transverse ribs.

## Revendications

1. Essuie-glace (1), en particulier pour une vitre d'un véhicule automobile, avec un bras d'essuie-glace motorisable (2) à l'extrémité libre (3) duquel est fixé sur un côté, en s'étendant transversalement à la direction longitudinale et indiguant en direction d'un balai d'essuie-glace (4), un axe (5) pour la liaison articulée du balai d'essuie-glace (4), axe qui s'emboîte dans une ouverture traversante (6) du balai d'essuie-glace (4) et qui, dans une position montée, est verrouillé axialement par un pont (7) disposé parallèlement à l'axe (5) sur le bras d'essuie-glace (2) et engageant en recouvrement le balai d'essuie-glace (4) par une extrémité recourbée (8), sachant que le balai d'essuie-glace (4) qui peut être disposé sur le bras d'essuie-glace (2) est un balai d'essuie-glace plat qui comprend une lame en caoutchouc (9), un moyen porteur soutenant la lame en caoutchouc (9) et réalisé de préférence sous la forme d'une barre de ressort en band allongée du genre bande, et une pièce de raccordement (10) disposée centralement sur le balai d'essuie-glace (4), **caractérisé par** les caractéristiques suivantes :
-- la pièce de raccordement (10) du balai d'essuie-glace (4) possède une structure en forme de caisson ouvert vers le haut, constituée de quatre parois frontales et latérales (11), sachant que les deux parois latérales (11) de la pièce de raccordement (10), orientées parallèlement à l'étendue longitudinale du balai d'essuie-glace (4) et mutuellement opposées, présentent des perçages traversants (6) mutuellement alignés,
-- il existe dans l'état monté une distance (16) entre le côté longitudinal de l'extrémité (3) du bras d'essuie-glace qui est tourné vers le balai d'essuie-glace (4) et le côté longitudinal de la pièce de raccordement (10) du balai d'essuie-glace (4) qui est tourné vers le bras d'essuie-glace (2),
-- afin de relier de manière fiable le balai d'essuie-glace (4) au bras d'essuie-glace (2), une pièce de liaison (12) peut être installée sur la pièce de raccordement (10) du balai d'essuie-glace (4), sachant que cette pièce de liaison (12) comprend un corps de base (13),
**caractérisé en ce que** le corps de base (13)
-- s'applique contre le côté extérieur de la pièce de raccordement (10) qui est opposé au bras d'essuie-glace (2),
-- présente un perçage borgne (14) aligné avec les perçages traversants (6) de la pièce de raccordement (10) et recevant l'axe (5) de l'extrémité (3) du bras d'essuie-glace, sachant que dans l'état monté, la face frontale de l'axe (5) s'applique contre le fond du perçage borgne (14), et
-- possède un évidement (15) s'étendant parallèlement à l'axe longitudinal du balai d'essuie-glace (4) et recevant l'extrémité recourbée (8) du pont (7) de l'extrémité (3) du bras d'essuie-glace.

2. Essuie-glace selon la revendication 1, **caractérisé en ce qu'**une traverse de recouvrement (17) est formée sur le corps de base (13) de la pièce de liaison (12), traverse qui s'étend transversalement à l'axe longitudinal du balai d'essuie-glace (4) en direction de l'extrémité (3) du bras d'essuie-glace, sachant que cette traverse de recouvrement (17) repose dans l'état monté sur la pièce de raccordement (10).

3. Essuie-glace selon la revendication 2, **caractérisé en ce qu'**une traverse latérale (18), qui s'enfonce dans la pièce de raccordement (10), est recourbée perpendiculairement à partir de la traverse de recouvrement (17) de la pièce de liaison (12).

4. Essuie-glace selon la revendication 3, **caractérisé en ce que** la traverse latérale (18) présente un perçage traversant (19) aligné avec le perçage borgne (14) ménagé dans le corps de base (13).

5. Essuie-glace selon la revendication 4, **caractérisé en ce que** les dimensions de la traverse latérale (18) sont adaptées à la pièce de raccordement (10) de telle sorte que, dans l'état monté, les perçages (6, 14, 19) de la pièce de raccordement (10) et de la pièce de liaison (12) sont positionnés en ajustement précis les uns par rapport aux autres.

6. Essuie-glace selon l'une des revendications précédentes, **caractérisé en ce que** le diamètre intérieur des perçages (6, 14, 19) de la pièce de raccordement (10) et de la pièce de liaison (12) est dimensionné en ajustement précis ou approximativement en ajustement précis par rapport au diamètre extérieur de l'axe (5) prévu à l'extrémité (3) du bras d'essuie-glace.

7. Essuie-glace selon l'une des revendications précédentes, **caractérisé en ce que** la surface du corps de base (13) de la pièce de liaison (12) possède une pente (20) dirigée dans l'état monté en oblique vers le bas en direction de la lame en caoutchouc (9), de sorte que, dans l'état de fonctionnement de l'essuie-glace (1), lorsque le balai d'essuie-glace (4) est pressé contre la vitre, la surface du corps de base (13) s'étend environ parallèlement au plan du pont (7).

8. Essuie-glace selon l'une des revendications précédentes, **caractérisé en ce que** la paroi du perçage borgne (14) du corps de base (13) de la pièce de liaison (12) est sectoriellement enlevée, de sorte que le perçage borgne (14) est sectoriellement ouvert vers un côté longitudinal.

9. Essuie-glace selon l'une des revendications précédentes, **caractérisé en ce que** la largeur (B) de la pièce de liaison (12) est inférieure à 16 mm.

10. Essuie-glace selon l'une des revendications précédentes, **caractérisé en ce que** l'évidement (15) du corps de base (13) de la pièce de liaison (12), évidement qui s'étend parallèlement à l'axe longitudinal du balai d'essuie-glace (4), est une ouverture traversant le corps de base (13) verticalement de part en part, de sorte que, dans l'état monté, l'extrémité recourbée (8) du pont (7) du bras d'essuie-glace (2) sort partiellement de la pièce de liaison (12) vers le bas.

11. Essuie-glace selon l'une des revendications précédentes, **caractérisé en ce que** le corps de base (13) de la pièce de liaison (12) présente une structure ouverte alvéolée avec des nervures longitudinales et transversales.
